# EUROPÄISCHE PATENTSCHRIFT

(11) **EP 2 119 684 B1**
(45) Veröffentlichungstag und Bekanntmachung des Hinweises auf die Patenterteilung: **23.11.2011**
(21) Anmeldenummer: 09165093.7
(22) Anmeldetag: 27.03.2002
(51) Int. Cl.: C04B 35/05

(54) **Verfahren zur Herstellung feuerfester Formkörper sowie feuerfester Formkörper**
Method of manufacturing refractory articles and refractory articles
Procédé de fabrication de pièces réfractaires et pièces ainsi obtenues

(30) Priorität: 05.04.2001 DE 10117028
(43) Veröffentlichungstag der Anmeldung: 18.11.2009
(62) Teilanmeldung aus: 02007036.3
(73) Patentinhaber: Refratechnik Holding GmbH, 85737 Ismaning (DE)
(72) Erfinder: Bartha, Peter, Dr., 37120 Bovenden (DE); Klischat, Hans-Jürgen, Dr., 37083 Göttingen (DE); Wirsing, Holger, 37081 Göttingen (DE); Weibel, Guido, 81739 München (DE)
(74) Vertreter: Solf, Alexander

(56) Entgegenhaltungen:
- GB-A- 468 765
- US-A- 3 140 955
- US-A- 3 310 414
- US-A- 3 332 740
- US-A- 3 391 011
- ALPHER ET AL.: "High Temperature Oxides" 1. Januar 1970 (1970-01-01), ACADEMIC PRESS , NEW YORK AND LONDON , XP002258751 * Seite 209 - Seite 209 * * Seite 218 - Seite 221 *
- KINGERY ET AL.: "Introduction to Ceramics, 2nd Ed." 1976, JOHN WILEY & SONS , XP002543691 * Seite 9 *

## Beschreibung

Die Erfindung betrifft ein Verfahren zur Herstellung feuerfester Formsteine unter Verwendung aus einer erstarrten Schmelze zerkleinerter und fraktionierter Resistorkörner. Die Erfindung betrifft zudem einen feuerfesten Formstein.

Als Resistor wird nachfolgend der Träger der Feuerfestigkeit und damit üblicherweise auch die Hauptkomponente eines feuerfesten Formsteins oder feuerfester Massen bezeichnet. Dieser Resistor kann im allgemeinsten Fall eine metalloxidische, mineralische, feuerfeste Substanz in Form von MgO, Al₂O₃, Doloma oder ähnliches sein.

Als Elastifizierer werden nachfolgend Minerale bezeichnet, welche aufgrund einer eigenen, relativ hohen Feuerfestigkeit, aber einer zum Resistor unterschiedlichen Temperaturdehnung, durch Mikrorißbildung und weitere Effekte zu einer Erhöhung der Temperaturwechselbeständigkeit einer Mischung aus Resistor und Elastifizierer - im Gegensatz zum reinen Resistor - führen.

Feuerfeste Formsteine, insbesondere basische, feuerfeste Materialien auf der Basis von Magnesia und Doloma werden bei allen Hochtemperaturprozessen mit basischem Schlackenangriff, wie z.B. bei der Zement-, Kalk-, Dolomit-, Eisen- und Stahlerzeugung sowie bei der Nichteisenmetallerzeugung und in der Glasindustrie, als Auskleidungsmaterial für Öfen und Gefäße verwendet. Bei hoher Feuerfestigkeit und guter chemischer Beständigkeit weisen diese Materialien bzw. Formsteine jedoch eine hohe Sprödigkeit, d.h. einen hohen Elastizitätsmodul auf.

Hierbei ist festzustellen, dass Formsteine auf Basis von Schmelzmagnesia deutlich spröder sind als Formsteine auf der Basis von Sintermagnesia. Naturgemäß weist jedoch die Schmelzmagnesia eine deutlich höhere Resistenz gegen thermochemischen Angriff auf als Sintermagnesia. Insofern wäre es wünschenswert, Schmelzmagnesia bzw. Formsteine oder Massen auf Basis von Schmelzmagnesia in Bereichen einzusetzen, in denen ein hoher thermochemischer Angriff, insbesondere ein Angriff dünnflüssiger, basischer Schlacken, stattfindet. Dies ist insbesondere im Drehrohrofen für die Zementerzeugung der Fall. Gerade in Zementdrehrohröfen ist jedoch eine erhebliche mechanische Belastung des feuerfesten Futters vorhanden, so dass bekannte Formsteine auf Basis von Schmelzmagnesia in derartigen Brennaggregaten nicht erfolgreich eingesetzt werden können, da ihre Sprödigkeit die eingetragenen Spannungen, insbesondere Ringspannungen, nicht verkraftet.

Formsteine auf Basis von Schmelzmagnesia sind selbst dann Formsteinen auf Basis von Sintermagnesia in derartigen Brennaggregaten unterlegen, wenn eine Elastifizierung des Formkörpers erfolgt.

Zur Elastifizierung, d.h. zur Verbesserung der Temperaturwechselbeständigkeit (TWB) basischer, feuerfester Materialien wurden in der Vergangenheit zahlreiche Maßnahmen ergriffen. So wird z.B. in Harders/Kienow, Feuerfestkunde, Herstellung, Eigenschaften und Verwendung feuerfester Baustoffe, Springer-Verlag 1960, Kapitel 5.5, Seite 755, vorgeschlagen, basische, feuerfeste Materialien mit Chromerz zu versetzen, wobei insbesondere die Chromerzmenge und die optimale Kornfraktion des Chromerzes definiert wurden. Um eine ausreichende Temperaturwechselbeständigkeit zu erlangen, sind dabei Chromerzmengen zwischen 15 und 30 Gew.-% notwendig. Die elastifizierende, d.h. den E-Modul senkende Wirkung des Chromerzes als Temperaturwechselbeständigkeitskomponente wird von W. Späth in "Zur Temperaturwechselbeständigkeit feuerfester Stoffe", Radex-Rundschau, Jahrgänge 1960-1961, Seite 673-688, Österreichisch-Amerikanische Magnesitaktiengesellschaft, Radenthein/Kärnten, durch Gefügeverspannungen aufgrund unterschiedlicher Wärmedehnungskoeffizienten zwischen Magnesia und Chromerz erklärt. Entscheidende Nachteile der Anwendung von Chromerz als Temperaturwechselbeständigkeitsverbesserer sind jedoch, dass bei einem Wechsel der Ofenatmosphäre Materialermüdungen stattfinden und dass durch Oxidation unter der Wirkung von Alkalien das im Chromerz in dreiwertiger Form vorliegende Chromoxid in toxisches, sechswertiges Chromoxid überführt wird, mit allen damit unter arbeitshygienischen und entsorgungstechnischen Gesichtspunkten verbundenen Problemen.

Es ist ferner aus der AT-PS 158 208 bekannt, Magnesiasteinen zur Verbesserung der Temperaturwechselbeständigkeit Tonerdepulver, Korund- und Aluminiumpulver zuzusetzen, wobei beim Steinbrand in situ Spinell gebildet wird. Der dabei gebildete Aluminium-Magnesium-Spinell ist in der Matrix konzentriert und z.T. nicht ausreagiert, so dass beim Angriff solcher Steine durch Schlacken bevorzugt die für die Festigkeit entscheidende Matrix zerstört wird. Auch ein derartiger Magnesium-Aluminium-Spinell weist gegenüber der reinen Magnesia einen anderen wärmedehnungskoeffizienten auf, so dass sich hierdurch ebenfalls Gefügeverspannungen und damit Mikrorisse ergeben.

Eine erhebliche Verbesserung sowohl der Temperaturwechselbeständigkeit als auch der chemischen Beständigkeit von Magnesiasteinen konnte erst durch Hinzusetzen von vorsynthetisiertem Magnesium-Aluminium-Spinell in Form von Sinter oder Schmelzspinell erreicht werden, wobei die üblichen Zusatzmengen zwischen 15 und 25 Gew-% liegen. Der Elastizitätsmodul lässt sich mit dieser Maßnahme auf etwa 20 kN/mm² senken. Nachteile bestehen jedoch nach wie vor dadurch, dass diese Spinellkomponente eine Reaktionsbereitschaft mit Schlacken-aufweist und somit ein Verschleiß im Bereich der Spinellmatrix stattfindet, der letztlich auch zu einem beschleunigten Resistorabbau führt.

Aus der DE 35 27 789 A1 ist ein grobkeramischer Formkörper bekannt, welcher ein im wesentlichen homogen im Formkörpergefüge verteiltes Mikrorißsystem aufweist. Dieser Druckschrift liegt dabei die Erkenntnis zugrunde, dass ein geringer E-Modul bei gleichzeitig hoher Resistenz gegen Schlackenangriff dadurch herstellbar ist, daß im Formkörpergefüge homogen ein Mikrorißbildner weit größeren Durchmessers, als im Falle von beispielsweise dichten, oxidkeramischen Hochtemperaturwerkstoffen, verteilt angeordnet wird, wobei der Mechanismus entweder darauf beruht, dass dieser während des Brennprozesses bzw. Steinsinterbrandes eine Expansion der betreffenden Partikel, also eine volumenvergrößernde Reaktion auslöst, wobei in den benachbarten, anderen Partikeln dann das Mikrorißsystem entsteht, oder aber eine starke Schwindung in der Mehlfraktion hervorgerufen wird, die wiederum zu dem beschriebenen Mikrorißsystem in den anderen Partikeln des Gemenges führt. Hierzu werden reine Magnesia und Tonerde in einem, dem Magnesiumaluminatspinell entsprechenden stöchiometrischen Verhältnis gemischt und zu Gemengepartikeln geformt, welche dann dem Grundversatz aus Sintermagnesia zugesetzt werden. Derartige feuerfeste Formkörper haben sich an sich bewährt. Insbesondere beim Einsatz in stark mechanisch beanspruchten Aggregaten mit hohem basischen Schlackenangriff, wie Drehrohröfen der Zementindustrie, kommt es jedoch auch bei derartigen Formkörpern zu schnellem Verschleiß.

Alper et al. beschreibt in "High Temperature Oxides", 1. Januar 1970, Academic Press, New York and London, Seite 209 und Seite 218 bis 221 schmelzgegossene Magnesiumoxid-Spinell-Feuerfestwerkstoffe. Schmelzgegossene Feuerfestprodukte werden hergestellt, indem man die Rohstoffe vermengt, in einem Elektrolichtbogenofen schmilzt und die Schmelze in eine Form aus Graphitplatten gießt und erkalten lässt. Diese sogenannten Ingots werden dann entnommen und können in verschiedenen Größen und Formen gesägt werden.

Die US 3 140 955 A beschreibt Alumina-enthaltende Schmelzmagnesia. Angaben zur Bildung oder Anwesenheit von Spinellen in einem MgO-Resistorkorn können der US 3 140 955 A nicht entnommen werden.

Die US 3 391 011 A offenbart ein Produkt, das aus MgO mit untergeordneten Mengen an Aluminiumoxid und Eisenoxid besteht.

Aus der DE 44 03 869 A1 ist eine feuerfeste, keramische Masse und deren Verwendung bekannt, wobei diese feuerfeste, keramische Masse aus 50 bis 97 Gew.-% MgO-Sinter sowie 3 bis 50 Gew.-% eines Spinells vom Hercynit-Typ bestehen soll. In dieser Druckschrift wird ausgeführt, dass z.B. für die Auskleidung von Industrieöfen, bei denen eine nennenswerte mechanische Beanspruchung der feuerfesten Auskleidung auftritt, Produkte gefordert sind, deren Sprödigkeit so gering wie möglich ist. Zu diesen Öfen würden Drehöfen der Zementindustrie gehören, wo es durch eine Ofendeformation zu einer erheblichen mechanischen Beanspruchung der feuerfesten Auskleidung kommen könne, aber auch Öfen der Stahl- und Nichteisenmetallindustrie würden hierzu gehören, wo insbesondere thermische Spannungen beim Aufheizen und bei Temperaturwechseln zu Problemen führen würden. Gegenüber chromerzhaltigen Steinen wird vorgeschlagen, als Elastifizierer Hercynit bzw. einen hercynitähnlichen Spinell zu verwenden, wobei der hercynitähnliche Spinell innerhalb der folgenden Bereichsgrenzen des ternären Zustandsdiagramms FeO - Al₂O₃ - MgO liegen soll:
- 23 bis 55 Gew.-% FeO
- < 15 Gew.-% MgO
- 54 bis 65 Gew. -% Al₂O₃
- < 3 Gew.-% Verunreinigung

Die unter Verwendung dieses Spinells hergestellten und gebrannten, feuerfesten Steine sollen eine deutlich verbesserte Duktilität aufweisen. Ferner wird in dieser Druckschrift ausgeführt, dass die Sintermagnesia auch durch Schmelzmagnesia ersetzt werden könne. Bei derartigen feuerfesten Produkten ist jedoch von Nachteil, dass die Spinelle vom Hercynit-Typ dazu neigen, MgO aus dem feuerfesten Resistor zu lösen und in sich aufzunehmen. Die Löslichkeitsgrenze des Spinells vom Hercynit-Typ für MgO liegt bei 15 bis 20 %. Umgekehrt ist das MgO in der Lage, Teile des Hercynit-Spinells bzw. der ihn ausbildenden Oxide FeO und Al₂O₃ in sich aufzunehmen. Es wurde deshalb bei derartigen feuerfesten Formkörpern eine unerwünscht Gefügeschwächung durch Diffusionsvorgänge und gegenseitiges Anlösen der Bestandteile beobachtet, wobei ein deutliches Diffusionsgefälle in Richtung von MgO zum Spinell wegen der höheren Diffusionsgeschwindigkeit des Mg²⁺ besteht (W. Schulle, Feuerfeste Werkstoffe, Deutscher Verlag für Grundstoffindustrie, 1990, S. 254). Ferner ist von Nachteil, dass bei der Verwendung von Schmelzmagnesia der elastifizierende Anteil des Spinells nicht hoch genug ist, um diesen Resistor für Drehrohröfen bei ausreichend hoher thermochemischer Beständigkeit geeignet zu machen.

Aufgabe der Erfindung ist es, ein Verfahren zur Herstellung eines feuerfesten Formsteins unter Verwendung feuerfester Resistorkörner zu schaffen, der bei einer sehr hohen thermochemischen Beständigkeit eine ausreichende Duktilität auch für den Einsatz in mechanisch hoch beanspruchten Aggregaten aufweist. Die Aufgabe wird mit einem Verfahren unter Verwendung feuerfester Resistorkörner mit den Merkmalen des Anspruchs 1 gelöst.

Vorteilhafte Weiterbildungen der Erfindung werden in den Unteransprüchen gekennzeichnet.

Erfindungsgemäß wird eine Schmelzmagnesia bzw. generell ein erschmolzener und damit an sich spröder Resistor derart konditioniert, dass er eine erhöhte Duktilität bzw. höhere Elastizität aufweist, so dass dieser Resistor bei hoher thermochemischer Beständigkeit auch in mechanisch hoch belasteten Aggregaten wie Drehrohröfen eingesetzt werden kann. Dies wird erfindungsgemäß dadurch erreicht, dass dem Resistor während des Schmelzvorganges Spinellbildner derart zugesetzt werden, dass die nach dem Schmelzen entstandenen Resistorkörner Ausscheidungen bzw. Ausscheidungsfelder aufweisen, in denen Spinell konzentriert ist. Hierbei wird die Zugabe von Spinellbildnern derart dosiert, dass die Löslichkeit des Resistors für diesen Spinellbildner überschritten wird, wobei durch die exakte Zudosierung des Spinellbildners somit die Anzahl und überraschenderweise auch die Größe der Ausscheidungsfelder bestimmbar ist.

Es ist ferner überraschend, dass eine ausreichende Elastifizierung des erschmolzenen Resistors möglich ist, obwohl zwischen den einzelnen, während des Sinterbrandes miteinander verbundenen Schmelzmagnesia oder Schmelzresistorkörnern hiermit kein sichtbares Mikrorißsystem erzeugt wird.

Von Vorteil bei einem derart konditionierten Resistor ist ferner, dass der Elastifizierer, welcher bezüglich der chemischen Resistenz den Schwachpunkt des Steines darstellt, vom chemisch resistenteren Resistor gegen die Schlacken abgeschirmt wird. Hierbei können mit den erfindungsgemäßen Zugabemengen von Spinellbildnern sogar derart hohe Elastifizierungsleistungen erzielt werden, dass der Resistor soweit konditioniert ist, dass er neben seinem "internen" Elastifizierer (Ausscheidungsfelder) keine weiteren externen Elastifiziererzugaben im Versatz benötigt.

Selbstverständlich ist es dennoch möglich, weitere Elastifizierer (externe Elastifizierer) zuzugeben.

Es hat sich herausgestellt, dass es von besonderem Vorteil ist, als externen Elastifizierer einen Spinell zu verwenden, wie er auch als interner Elastifizierer Anwendung findet. Dies wird darauf zurückgeführt, dass der Resistor durch die Eigenelastifizierung derart weit mit dem Spinell abgesättigt ist, dass eine Diffusionshemmung bzw. -verminderung hierdurch erzeugt wird. Die Einflüsse durch Diffusion, beispielsweise eines reinen Hercynit, auf den Resistor werden hierdurch unterbunden.

Bei dem erfindungsgemäßen Anwendungsgebiet, nämlich der Schmelzmagnesia, werden bevorzugt FeO und Al₂O₃ zugesetzt, so dass die Ausscheidungsfelder im wesentlichen aus einem Pleonastspinell bzw. einem Spinell vom Pleonast-Typ ausgebildet werden. Es hat sich herausgestellt, dass dieser Elastifizierer vom Pleonast-Typ sowohl intern als auch extern über eine erheblich verbesserte Verträglichkeit mit dem Resistor verfügt, wobei eine ausreichende Elastifizierung gewährleistet ist. Ferner weist dieser Elastifizierer gegenüber bekannten Elastifizierern eine erhöhte thermochemische Beständigkeit auf.

Die Erfindung wird im folgenden anhand einer Zeichnung beispielhaft erläutert. Es zeigt hierbei
- Fig. 1: ein erfindungsgemäßes Schmelzkorn aus MgO mit pleo- nastischen, punktförmigen Entmischungen im Korn sowie an den Korngrenzen;
- Fig. 2: eine weitere Aufnahme eines erfindungsgemäßen Schmelzkorns aus MgO mit punktförmigen Aluminium- Spinell-Entmischungen im Korn sowie an den Korngren- zen.
- Fig. 3: den Zusammensetzungsbereich eines erfindungsgemäß konditionierten Resistors auf Basis Periklas im ter- nären System FeOₓ-Al₂O₃-MgO,
- Fig. 4: den Verfahrensstammbaum der Herstellung des erfin- dungsgemäßen Resistors und Formkörper hieraus.

Erfindungsgemäß weist ein Resistor, d.h. der Träger der Feuerfestigkeit eines feuerfesten Gemenges, üblicherweise eine metalloxidische, mineralische, körnige Komponente Entmischungsfelder von Spinell auf. Erfindungsgemäß wird ein Resistor auf Basis MgO gewählt, wobei dieser Resistor aus einem dotierten Magnesiumoxid besteht, welches Entmischungen von Spinell enthält. Der Spinell selbst kann eine Zusammensetzung entsprechend (Fe, Mg)²⁺ (Al)³⁺₂ O₄ haben. Die Menge dieser Spinellentmischungen in der Magnesia bzw. dem feuerfesten Resistor können zwischen 2 und 25 M-% liegen.

Im erfindungsgemäßen Formkörper ist eine Korrosion weniger möglich, da der Spinell im MgO-Korn eingebunden ist und das Gefüge hierdurch seine Elastizität auf Dauer behält. Im Gegensatz hierzu verbleibt im Stand der Technik nach dem Verschleiß des Elastifizierers ein Gerüst aus einem spröden Material, welches, nachdem der Elastifizierer verschlissen ist, beschleunigt weiter verschleissen kann. Auch eine lokale Anreicherung an Korrosionsprodukten, wie sie bei Formkörpern vorkommt, in denen die Elastifizierer in körniger bzw. lokal stark angereicherter Form vorliegen, wird vermieden.

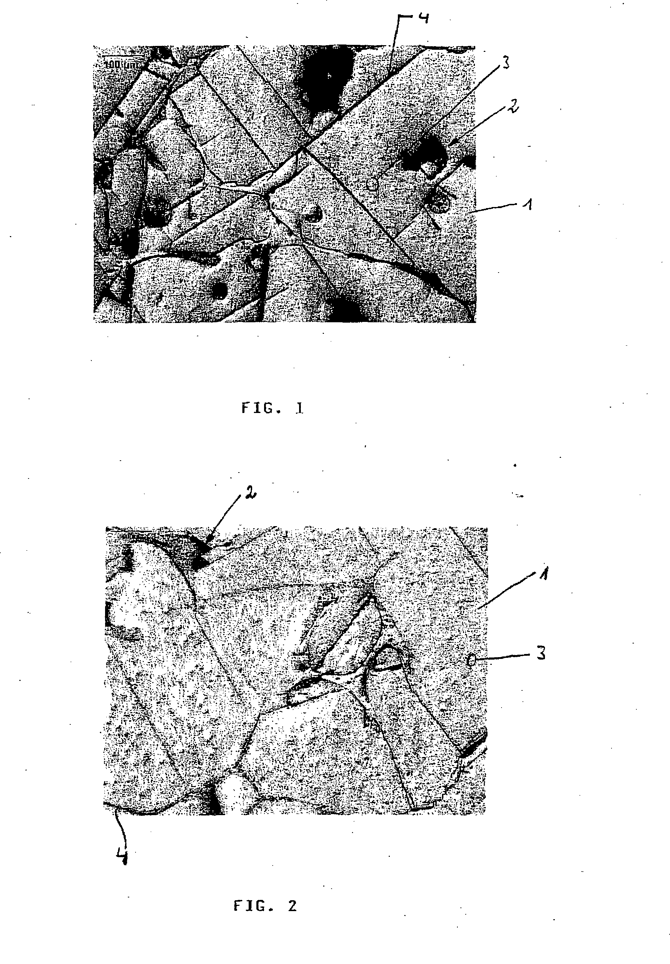

Wie die beiden Abbildungen gemäß Fig. 1 und Fig. 2 zeigen, sind die Spinellentmischungen punktförmig im gesamten Schmelzkorn relativ gleichmäßig verteilt, wobei selbstverständlich auch in den Korngrenzenbereichen Spinellentmischungen vorhanden sind. Sollten diese korrodiert werden, stellen sie jedoch nur einen geringen Anteil der tatsächlich vorhandenen Spinellentmischungen dar, so dass auch die elastifizierende Wirkung der Spinellentmischungen nur minimal beeinträchtigt wird. Es ist deshalb möglich, mit einem Formkörper, der die erfindungsgemäß elastifizierten Schmelzmagnesiakörner enthält, thermomechaniseh sensible Aggregate zuzustellen, wobei gegenüber dem bisherigen Stand der Technik eine verringerte thermomechanische Empfindlichkeit besteht, da bereits die Resistorkörner eine verbesserte Elastizität und Plastizität aufweist und auch die Korrosionsbeständigkeit verbessert ist. Diese Effekte lassen sich zum einen über den Elastizitätsmodul, als Maß für die Elastizität, sowie zum anderen über Dₘₐₓ aus der Messung des Druckerweichens nach DIN 51053 (mit einer mechanischen Belastung von 0,2 N/mm²), als Maß für die Ringspannung bzw. die plastische Verformung, nachweisen, da sich bei hohem Dₘₐₓ auch höhere Spannungen aufbauen, die zu einer Abplatzung von Steinschichten und damit zu einer vorzeitigen Zerstörung der feuerfesten Ausmauerung führen. Bei einem niedrigen Dₘₐₓ können sich aufgrund plastischer Vorgänge die mechanischen Spannungen bereits zerstörungsfrei abbauen.

In den Abbildungen gemäß Fig. 1 und Fig. 2 sind die großen, weißen Felder 1 Periklaskristalle, welche im Bereich der angedeuteten Risse bzw. Korngrenzen 4 aneinanderstoßen. In den Periklaskristallen sind die punktförmigen Spinellentmischungen 3 zu erkennen, wobei Lunker bzw. Poren 2 vorhanden sind. Die punktförmigen Entmischungen 3 in Fig. 1 sind pleonastische Spinelle, während die punktförmigen Entmischungen 3 in Fig. 2 Magnesium-Aluminiumspinelle sind.

Grundsätzlich kann eine derart konditionierte Schmelzmagnesia auch zusammen mit herkömmlicher Sintermagnesia verwendet werden, wenn dies aus bestimmten Gründen, beispielsweise Kostengründen, gewünscht ist.

Als Ausgangsstoffe werden insbesondere kaustische Magnesia, Magnesiumhydroxid und Magnesit verwendet, wobei zur Ausbildung der Spinellentmischungen Aluminiumoxid, beispielsweise in Form von Tabulartonerde, und Eisenoxid, zugegeben werden.

Selbstverständlich kann zur Bildung von Spinellentmischungen auch lediglich Aluminiumoxid zur Ausbildung von Aluminium-Magnesium-Spinell zugegeben werden. Weiterhin ist es selbstverständlich möglich alle spinellbildenden Minerale entsprechend einer stöchiometrisch erforderlichen Menge als Spinellbildner zuzugeben, d.h. die entsprechenden Oxide der Elemente Eisen, Magnesium und Aluminium.

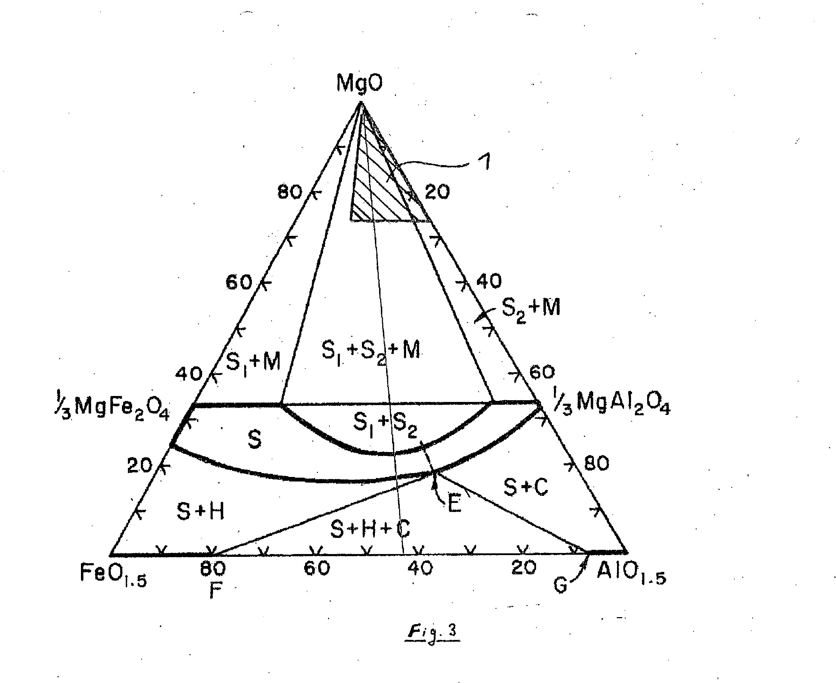

In Fig. 3 wird beispielhaft das Feld eines eigenelastifizierten Periklases gemäß der Erfindung mit einem schraffierten Feld 1 dargestellt.

Im folgenden wird die Erfindung anhand von Ausführungsbeispielen erläutert.

### Beispiel 1:

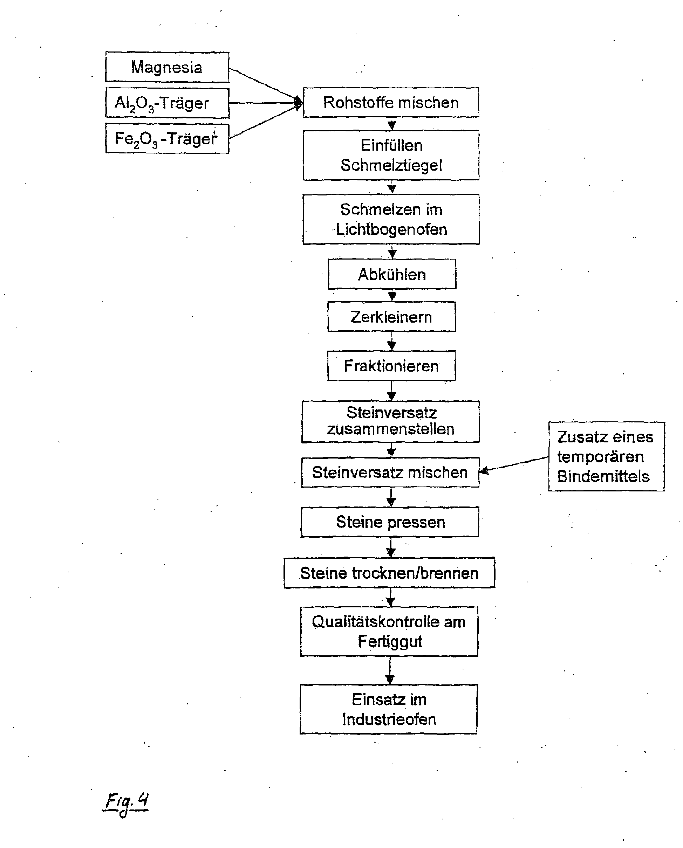

90 % einer kaustischen Magnesia, 4,4 % Eisenoxid und 5,6 % Aluminiumoxid werden in einem Elektrolichtbogenofen bei einer Temperatur von ca. 3000°C erschmolzen (Fig. 4). Nach dem Schmelzprozeß und dem nachfolgenden Abkühlen wird das erschmolzene Produkt in Fraktionen von 0 bis 1 mm, 1 bis 2 mm, 2 bis 4 mm und Mehl aufbereitet. Die Versatzzusammenstellung zur Herstellung des feuerfesten Formkörpers erfolgt entsprechend einer typischen Fullerkurve. Die durch die Zusammenstellung der Fraktionen erzielte Körnung wird mit einer erforderlichen Menge an Ligninsulfonat versetzt und mit einem spezifischen Preßdruck von 130 MPa zu Formkörpern gepreßt. Nach einer Trocknung wird der Stein bei einer Sintertemperatur von ca. 1600°C gebrannt. Zum Vergleich wird der gleiche Versatz mit einer Magnesia hergestellt, die ebenfalls erschmolzen ist, die jedoch kein zusätzliches Eisenoxid und kein zusätzliches Aluminiumoxid enthält. An diesem Stein wird nach dem Steinbrand die elastische Eigenschaft sowie die thermisch-mechanische Größe Dₘₐₓ gemessen, um eine Aussage über das elastische und plastische Verhalten treffen zu können.

Die erreichten Eigenschaften sind in der nachfolgenden Tabelle aufgeführt:

**Tabelle 1**

| | Magnesiastein | Magnesiastein mit Pleonastent- |
|---|---|---|
| Rohdichte / g/cm3 | 3,03 | 3,03 |
| Porosität / % | 15,12 | 15,05 |
| E-Modul / GPa | 98,3 | 34,5 |
| G-Modul / GPa | 43,2 | 16,8 |
| Kaltdruckfestig-keit / MPa | 91,3 | 88,8 |
| TWB nach DIN 51068 | 4 | > 20 |
| DE : Dₘₐₓ / % nach DIN 51053 | 2,11 | 1,68 |

Dieser Tabelle kann man entnehmen, dass die Werte der elastischen Eigenschaften eines Magnesiasteins, der aus einem Resistor mit Pleonastentmischungen ausgebildet ist, weit unter den typischen Werten von reinen Magnesiasteinen liegen. Gleichzeitig wird aufgrund des plastischen, rißfreien Spannungsabbaus der Dₘₐₓ-Wert überraschenderweise um mehr als 20% gesenkt, wodurch auch die mechanischen Spannungen, die sich in einem ringförmigen Aggregat oder bei Einspannung der Ausmauerung in einen mechanische Rahmen, etwa im Falle eines stationären Ofens, bilden, ebenfalls signifikant sinken.

### Beispiel 2:

85 % Magnesia und 15 % Aluminiumoxid werden in einem Elektrolichtbogenofen bei einer Temperatur von ca. 3000°C erschmolzen (Fig. 4). Das Schmelzprodukt enthält Entmischungen von Magnesium-Aluminium-Spinell, wie sie in Fig. 2 dargestellt sind. Dieses Material wird nach dem Schmelzprozeß in Fraktionen 0 bis 1 mm, 1 bis 2 mm, 2 bis 4 mm und Mehl aufbereitet. Die Versatzzusammenstellung zur Herstellung eines feuerfesten Formkörpers erfolgt entsprechend einer typischen Fullerkurve. Die aus den einzelnen Fräktionen entsprechend der Fullerkurve zusammengestellte Körnung wird mit einer an sich üblichen und erforderlichen Menge an Ligninsulfonat als temporären Binder versetzt und mit einem spezifischen Preßdruck von 130 MPa verpreßt. Nach einer Trockung wird der Formkörper bei einer Sintertemperatur von 1600°C gebrannt. Zum Vergleich wird ein Formkörper aus reiner Magnesia, wie in Beispiel 1, herangezogen. Die Meßgrößen entsprechen denen des Beispiels 1. Die erreichten Eigenschaften sind in der nachfolgenden Tabelle aufgeführt:

**Tabelle 2**

| | Magnesiastein | Magnesiastein mit Pleonastent-mischungen |
|---|---|---|
| Rohdichte / g/cm3 | 3,03 | 2,99 |
| Porosität / % | 15,12 | 15,23 |
| E-Modul / GPa | 98,3 | 16,7 |
| G-Modul / GPa | 43,2 | 7,5 |
| Kaltdruckfestig- keit / MPa | 91,3 | 79,3 |
| TWB nach DIN 51068 | 4 | > 20 |
| DE : Dₘₐₓ / nach DIN 51053 | 2,11 | 1,6 6 |

Auch aus dieser Tabelle ergibt sich, dass die Werte der elastischen Eigenschaften des Spinellentmischungen aufweisenden Resistors weit unter den typischen Werten von reinen Magnesiasteinen liegen. Gleichzeitig wird aufgrund des plastischen, rissfreien Spannungsabbaus der Dₘₐₓ-Wert ebenfalls um mehr als 20 % gesenkt, wodurch auch die mechanischen Spannungen in feuerfesten Mauerwerken eines Industrieofens signifikant sinken.

Erfindungsgemäß hergestellte Formkörper lassen sich überall dort einsetzen, wo starke mechanische und thermomechanische Spannungen auftreten. Gegenüber bislang bekannten Formkörpern mit dem von Natur aus spröden MgO-Korn, insbesondere Schmelzkorn, weist der erfindungsgemäße Resistor eine erhöhte Plastizität und Elastizität auf. Hierbei ist von Vorteil, dass die Elastizität und die Plastizität in erfindungsgemäß hergestellten Resistoren im Korn selbst erzeugt wird.

Selbstverständlich schließt die Verwendung des erfindungsgemäß hergestellten Resistors eine Anwendung in feuerfesten Formkörpern, die weitere Elastifizierer wie Spinell, Hercynit, Zirkoniumoxid oder Chromerz enthalten nicht aus. Hier können sich die positiven Wirkungen der eigenelastifizierten Resistoren sowie der zugesetzten Elastifizierer addieren, wodurch sich eine weitere verbesserte Elastizität und Hochtemperatur-Plastizität ergibt. Dies ist der folgenden Tabelle zu entnehmen:

**Tabelle 3**

| | Magnesiastein | Magnesiastein mit Spinellentmischungen | Magnesiastein mit Pleonastentmischungen und 15 % Spinell |
|---|---|---|---|
| Rohdichte / g/cm3 | 3,03 | 2,99 | 2,99 |
| Porosität / % | 15,12 | 15,23 | 15,31 |
| E-Modul / GPa | 98,3 | 16,7 | 15,6 |
| G-Modul / GPa | 43,2 | 7,5 | 7,2 |
| Kaltdruck-festigkeit / MPa | 91,3 | 79,3 | 61,8 |
| TWB nach DIN 51068 | 4 | > 20 | > 30 |
| DE : Dₘₐₓ / % nach DIN 51053 | 2,11 | 1,66 | 1,65 |

Darüber hinaus ist es selbstverständlich auch möglich, erfindungsgemäß hergestellte Resistoren zusammen mit anderen üblichen Resistoren in feuerfesten Massen oder Formkörpern zu verwenden.

## Patentansprüche

1. Verfahren zur Herstellung feuerfester Formsteine unter Verwendung von aus einer erstarrten Schmelze zerkleinerten und fraktionierten Resistorkörnern aus Schmelzmagnesia als feuerfeste Hauptkomponente mit folgenden Verfahrensschritten:
- Herstellen von Resistorkörnern durch gemeinsames Schmelzen einer Mischung aus einer feuerfesten metalloxidischen MgO-Hauptkomponente oder einem üblichen Ausgangsstoff der Hauptkomponente und aus einem Spinellbildner der Formel A²⁺B³⁺₂O₄ aus den Elementen A²⁺ = Fe, Mg und B³⁺ = Al bildenden Oxiden oder einem üblichen Ausgangsstoff der Oxide, wobei die Mischung den Spinellbildner in einer Menge dosiert zugesetzt enthält, dass seine Löslichkeit in der Schmelze überschritten wird und beim Abkühlen der Schmelze Entmischungsfelder von elastifizierenden Spinellen der genannten Formel A²⁺_{B}³⁺₂O₄ punktförmig und relativ gleichmäßig verteilt in den Resistorkörnern ausgebildet werden, und dies Resistorkörner 2 bis 25 M-% des Elastifizierers enthalten
- Zerkleinern und Fraktionieren des Schmelzprodukts,
- Herstellen eines Versatzes mit den Resistorkörnern zur Herstellung von feuerfesten Formsteinen, wobei eine Körnung durch die Zusammenstellung der Fraktionen und ggf. weiterer Zusätze entsprechend der Fullerkurve erzeugt wird
- der Versatz mit einer erforderlichen Menge an Bindemittel versetzt und mit einem spezifischen Pressdruck von über 50 MPA zu Formkörpern verpresst wird
- der Formkörper getrocknet wird
- der getrocknete Formkörper bei über 1000°C zu Formsteinen gesintert wird.

2. Verfahren nach Anspruch 1,
**dadurch gekennzeichnet dass** der Versatz mit weiteren bekannten Elastifizierer wie MgAl-Spinell, Hercynit, Zirkoniumoxid, versetzt wird.

3. Verfahren nach Anspruch 1 und/oder 2,
**dadurch gekennzeichnet, dass** der Versatz mit Ligninsulfonat als Bindemittel versetzt wird.

4. Verfahren nach einem oder mehreren der Ansprüche 1 bis 3, **dadurch gekennzeichnet , dass** der Versatz mit einem spezifischen Pressdruck von 80 - 200 MPA, vorzugsweise von 100 - 150 MPA zu Formkörpern verpresst wird.

5. Verfahren nach einem oder mehreren der Ansprüche 1 bis 4, **dadurch gekennzeichnet, dass** der getrocknete Formkörper bei 1200 - 1750°C gebrannt wird.

6. Verfahren nach einem oder mehreren der Ansprüche 1 bis 5, **dadurch gekennzeichnet, dass** als Spinell bildende Minerale Oxide der Elemente Fe, Mg und Al verwendet werden.

7. Verfahren nach einem oder mehreren der Ansprüche 1 bis 6, **dadurch gekennzeichnet, dass** als Spinellbildner Metalloxide verwendet werden, die in den Resistorkörnern einem mit MgO gesättigten pleonastischen Spinell der allgemeinen Formel (Fe, Mg)(Al)₂O₃ bilden.

8. Verfahren nach einem oder mehreren der Ansprüche 1 bis 7,
**dadurch gekennzeichnet, dass** die Hauptkomponente Periklas ist.

9. Verfahren nach einem oder mehreren der Ansprüche 1 bis 8,
**dadurch gekennzeichnet, dass** der elastifizierende Spinell ein MgAl-Spinell ist.

10. Feuerfester, bei Sintertemperaturen über 1000°C, insbesondere bei Sintertemperaturen von 1200 bis 1750°C gebrannter Formstein, der als eine feuerfeste Hauptkomponente aus einer erstarrten Schmelze zerkleinerte und fraktionierte Resistorkörnern aus Schmelzmagnesia aufweist, wobei die Resistorkörner hergestellt sind durch die folgender Verfahrensschritte:
- gemeinsames Schmelzen einer Mischung aus einer feuerfesten metalloxidischen MgO-Hauptkomponente oder einem üblichen Ausgangsstoff der Hauptkomponente und aus einem Spinellbildner der Formel A²⁺B³⁺₂O₄ aus den Elementen A²⁺ = Fe, Mg und B³⁺ = Al bildenden Oxiden oder einem üblichen Ausgangsstoff der Oxide, wobei die Mischung den Spinellbildner in einer Menge dosiert zugesetzt enthält, dass seine Löslichkeit in der Schmelze überschritten wird und beim Abkühlen der Schmelze Entmischungsfelder von elastifizierenden Spinellen der genannten Formel A²⁺B³⁺₂O₄ punktförmig und relativ gleichmäßig verteilt in den Resistorkörnern ausgebildet werden, und die Resistorkörner 2 bis 25 M-% des Elastifizierers enthalten
- Zerkleinern und Fraktionieren des Schmelzprodukts.

11. Formkörper nach Anspruch 10,
**dadurch gekennzeichnet , dass** er weitere Elastifizierer wie Mg-Spinell, Hercynit, Zirkoniumoxid aufweist.

12. Formkörper nach Anspruch 10 und/oder 11,
**dadurch gekennzeichnet, dass** die Hauptkomponente Periklas ist.

13. Formkörper nach einem oder mehreren der Ansprüche 10 bis 12,
**dadurch gekennzeichnet, dass** der elastifizierende Spinell ein MgAl-Spinell ist.

14. Formkörper nach einem oder mehreren der Ansprüche 10 bis 13,
**dadurch gekennzeichnet, dass** der elastifizierende Spinell ein pleonastisches Spinell der allgemeinen Formel (Fe, Mg)Al₂O₄ ist.

15. Formkörper nach einem oder mehreren der Ansprüche 10 bis 14,
**dadurch gekennzeichnet, dass** die Resistorkörner 70 bis 98% der Hauptkomponente aufweisen.

## Claims

1. Method for manufacturing refractory moulded blocks using resistor grains which are comminuted from a solidified melt and fractionated and are formed from fused magnesia as the main refractory component, comprising the following method steps:
- resistor grains are produced by co-melting a mixture of a refractory, metal oxide MgO main component or a standard precursor of the main component and of oxides forming a spinel-forming agent of the formula A²⁺B³⁺₂O₄ from the elements A²⁺ = Fe, Mg and B³⁺ = Al or a standard precursor of the oxides, wherein the mixture contains the spinel-forming agent metered in in a quantity which is such that its solubility in the melt is exceeded and, during cooling of the melt, segregation areas of elasticizing spinels of said formula A²⁺B³⁺₂O₄ are formed in a punctiform and relatively uniform distribution in the resistor grains, and the resistor grains contain 2 to 25% by mass of the elasticizer,
- the melt product is comminuted and fractionated,
- a batch is produced with the resistor grains for manufacturing refractory moulded blocks, wherein a grain size is produced by the composition of the fractions and optionally further additives according to the Fuller curve,
- the batch is mixed with a required quantity of binder and is pressed to form moulded bodies at a specific pressing pressure of more than 50 MPa,
- the moulded body is dried, and
- the dried moulded body is sintered to form moulded blocks at above 1000°C.

2. Method according to Claim 1,
**characterized in that**
the batch is mixed with further known elasticizers such as MgAl spinel, hercynite, zirconium oxide.

3. Method according to Claim 1 and/or 2,
**characterized in that**
the batch is mixed with lignin sulphonate as the binder.

4. Method according to one or more of Claims 1 to 3,
**characterized in that**
the batch is pressed to form moulded bodies at a specific pressing pressure of 80-200 MPa, preferably 100-150 MPa.

5. Method according to one or more of Claims 1 to 4,
**characterized in that**
the dried moulded body is fired at 1200-1750°C.

6. Method according to one or more of Claims 1 to 5,
**characterized in that**
oxides of the elements Fe, Mg and Al are used as spinel-forming minerals.

7. Method according to one or more of Claims 1 to 6,
**characterized in that**
the spinel-forming agents used are metal oxides which, in the resistor grains, form an MgO-saturated pleonastic spinel of the general formula (Fe, Mg)(Al)₂O₃.

8. Method according to one or more of Claims 1 to 7,
**characterized in that**
the main component is periclase.

9. Method according to one or more of Claims 1 to 8,
**characterized in that**
the elasticizing spinel is an MgAl spinel.

10. Refractory moulded block, which is fired at sintering temperatures above 1000°C, in particular at sintering temperatures of 1200 to 1750°C, and, as a main refractory component, contains resistor grains which are comminuted from a solidified melt and fractionated and are formed from fused magnesia, wherein the resistor grains are produced by the following method steps:
- a mixture of a refractory, metal oxide MgO main component or a standard precursor of the main component and of oxides forming a spinel-forming agent of the formula A²⁺B³⁺₂O₄ from the elements A²⁺ = Fe, Mg and B³⁺ = Al or a standard precursor of the oxides is co-melted, wherein the mixture contains the spinel-forming agent metered in in a quantity which is such that its solubility in the melt is exceeded and, during cooling of the melt, segregation areas of elasticizing spinels of said formula A²⁺B³⁺₂O₄ are formed in a punctiform and relatively uniform distribution in the resistor grains, and the resistor grains contain 2 to 25% by mass of the elasticizer, and
- the melt product is comminuted and fractionated.

11. Moulded body according to Claim 10,
**characterized in that**
it comprises further elasticizers such as Mg spinel, hercynite, zirconium oxide.

12. Moulded body according to Claim 10 and/or 11,
**characterized in that**
the main component is periclase.

13. Moulded body according to one or more of Claims 10 to 12,
**characterized in that**
the elasticizing spinel is an MgAl spinel.

14. Moulded body according to one or more of Claims 10 to 13,
**characterized in that**
the elasticizing spinel is a pleonastic spinel of the general formula (Fe, Mg)Al₂O₄.

15. Moulded body according to one or more of Claims 10 to 14,
**characterized in that**
the resistor grains have 70 to 98% of the main component.

## Revendications

1. Procédé de fabrication de briques moulées réfractaires moyennant l'utilisation comme composant principal de grains réfractaires de magnésie fondue, fragmentés et fractionnés à partir d'un bain solidifié, comprenant les étapes de procédé suivantes :
- préparation de grains réfractaires par fusion commune d'un mélange d'un composant principal d'oxyde métallique réfractaire MgO ou d'une substance de départ ordinaire du composant principal et d'oxydes formant un générateur de spinelle de la formule A²⁺B³⁺₂O₄ composés des éléments A²⁺ = Fe, Mg et B³⁺ = Al ou d'une substance de départ ordinaire des oxydes, dans lequel le mélange contenant le générateur de spinelle est ajouté de façon dosée en une quantité telle que sa solubilité dans le bain est dépassée et que, lors du refroidissement du bain, il se forme des zones de démélangeage de spinelles élastifiants de la formule citée A²⁺B³⁺₂O₄, réparties ponctuellement et relativement uniformément dans les grains réfractaires, et que les grains réfractaires contiennent 2 à 25 % en mole de l'élastifiant,
- fragmentation et fractionnement du produit de fusion,
- préparation d'un mélange avec les grains réfractaires pour la fabrication de briques moulées réfractaires, dans lequel une granulométrie est réalisée par l'assemblage des fractions et, le cas échéant, d'autres additifs conformément à la courbe de Fuller,
- le mélange est additionné d'une quantité nécessaire de liant et est pressé avec une pression spécifique de plus de 50 MPa pour donner des corps moulés,
- le corps moulé est séché,
- le corps moulé séché est fritté à plus de 1000 °C pour donner des briques moulées.

2. Procédé selon la revendication 1,
**caractérisé en ce que**
le mélange est additionné d'autres élastifiants connus comme le spinelle MgAl, l'hercynite, l'oxyde de zirconium.

3. Procédé selon la revendication 1 et/ou 2,
**caractérisé en ce que**
le mélange est additionné de sulfonate de lignine comme liant.

4. Procédé selon l'une ou plusieurs des revendications 1 à 3,
**caractérisé en ce que**
le mélange est pressé en corps moulés sous une pression de 80 à 200 MPa, de préférence de 100 à 150 MPa.

5. Procédé selon l'une ou plusieurs des revendications 1 à 4,
**caractérisé en ce que**
le corps moulé séché est cuit entre 1200 et 1750 °C.

6. Procédé selon l'une ou plusieurs des revendications 1 à 5,
**caractérisé en ce que**
les oxydes des éléments Fe, Mg et Al sont utilisés comme minéraux générateurs de spinelle.

7. Procédé selon l'une ou plusieurs des revendications 1 à 6,
**caractérisé en ce que**
des oxydes métalliques qui, dans les grains réfractaires, forment un spinelle pléonastique saturé de MgO de la formule générale (Fe, Mg) (Al)₂O₃ sont utilisés comme minéraux générateurs de spinelle.

8. Procédé selon l'une ou plusieurs des revendications 1 à 7,
**caractérisé en ce que**
le composant principal est de la périclase.

9. Procédé selon l'une ou plusieurs des revendications 1 à 8,
**caractérisé en ce que**
le spinelle élastifiant est un spinelle MgAl.

10. Brique moulée réfractaire cuite à des températures de frittage de plus de 1000 °C en particulier à des températures de frittage de 1200 à 1750 °C, qui comporte comme un composant principal réfractaire des grains réfractaires de magnésie de fusion fragmentés et fractionnés à partir d'un bain solidifié, dans laquelle les grains réfractaires sont préparés par les étapes de procédé suivantes :
- fusion commune d'un mélange d'un composant principal d'oxyde métallique réfractaire MgO ou d'une substance de départ ordinaire du composant principal et d'oxydes formant un générateur de spinelle de la formule A²⁺B³⁺₂O₄ composés des éléments A²⁺ = Fe, Mg et B³⁺ = Al ou d'une substance de départ ordinaire des oxydes, dans laquelle le mélange contenant le générateur de spinelle est ajouté de façon dosée en une quantité telle que sa solubilité dans le bain est dépassée et que, lors du refroidissement du bain, il se forme des zones de démélangeage de spinelles élastifiants de la formule citée A²⁺B³⁺₂O₄ répartis ponctuellement et relativement uniformément dans les grains réfractaires, et que les grains réfractaires contiennent 2 à 25 % en mole de l'élastifiant,
- fragmentation et fractionnement du produit de fusion.

11. Corps moulé selon la revendication 10,
**caractérisé en ce que**
il comporte d'autres élastifiants comme des spinelles de Mg, de l'hercynite, de l'oxyde de zirconium.

12. Corps moulé selon la revendication 10 et/ou 11,
**caractérisé en ce que**
le composant principal est de la périclase.

13. Corps moulé selon l'une ou plusieurs des revendications 10 à 12,
**caractérisé en ce que**
le spinelle élastifiant est un spinelle MgAl.

14. Corps moulé selon l'une ou plusieurs des revendications 10 à 13,
**caractérisé en ce que**
le spinelle élastifiant est un spinelle pléonastique de la formule générale (Fe, Mg) (Al)₂O₄.

15. Corps moulé selon l'une ou plusieurs des revendications 10 à 14,
**caractérisé en ce que**
les grains réfractaires comportent de 70 à 98 % du composant principal.
